(19) Europäisches Patentamt
European Patent Office
Office européen des brevets

(11) Publication number: **0 511 753 A2**

(12) **EUROPEAN PATENT APPLICATION**

(21) Application number: **92303350.0**

(22) Date of filing: **14.04.92**

(51) Int. Cl.[5]: **D01F 6/60**, D01D 5/26, C08G 69/32, C08G 69/28

(30) Priority: **29.04.91 KR 687791**
**13.03.92 KR 415492**

(43) Date of publication of application:
**04.11.92 Bulletin 92/45**

(84) Designated Contracting States:
**AT BE CH DE ES FR GB IT LI LU NL SE**

(71) Applicant: **KOLON INDUSTRIES, INC.**
**Kolon Bldg., 45 Mugyo-dong**
**Jung-gu, Seoul(KR)**

(72) Inventor: **You, Seog Chul**
**Jang-An Apt., 2-503, 1 Kongdan-dong, Kumi**
**Kyungsangbuk-do(KR)**
Inventor: **Park, Young Hwan**
**Woobang (I) Apt., 13-507 Songjung-dong, Kumi**
**Kyungsangbuk-do(KR)**
Inventor: **Oh, Sang Yul**
**Hyundai Bakjo Apt., 108-405 Bori-dong, Dalsu-gu, Taegu(KR)**
Inventor: **Ji, Chang-Seob**
**Bella Apt., 3-102, 42 Songjung-dong, Kumi**
**Kyungsangbuk-do(KR)**

(74) Representative: **Jones, Helen Marjorie Meredith**
**Gill Jennings & Every 53-64 Chancery Lane**
**London WC2A 1HN(GB)**

(54) **Aromatic polyamide pulp and a process for the preparation thereof.**

(57) The present invention provides a process for the preparation of aromatic polyamide pulp having excellent properties, which is a process for the preparation of aromatic polyamide pulp containing homopolymer or copolymer with repeating unit expressed by the general formula (1) or (2)

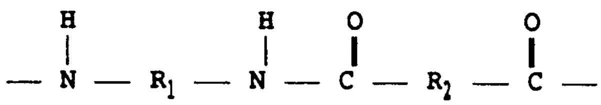 ............... (1)

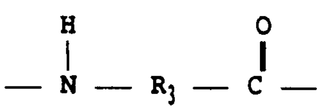 ............... (2)

wherein each of $R_1$, $R_2$, $R_3$ represents one of the following aromatic group,

EP 0 511 753 A2

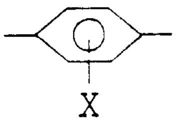 , 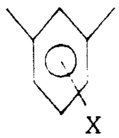 , 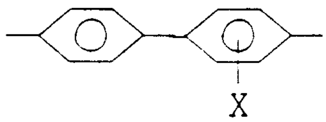 , 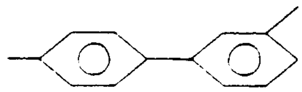 ,

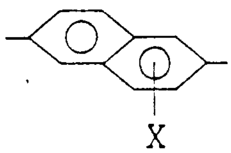 , 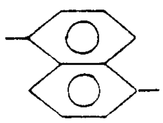 , 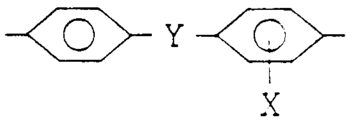 , 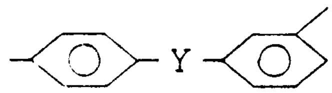

X is -H, -Cl, -Br, -I, $C_{1-4}$ alkyl group or $C_{1-4}$ alkoxy group, Y is

$-CH_2-$, 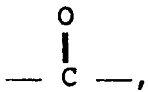 , 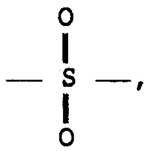 , $-O-$, 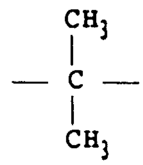 or 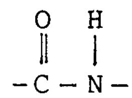

which comprises:

a) preparing a polymerization solvent by adding a Lewis acid type compound to an amide type organic solvent, an urea type organic solvent or the mixture thereof;

b) obtaining anisotropic liquid crystalline polymer solution prior to gelation by dissolving an aromatic diamine in the prepared polymerization solvent and adding an aromatic diacid chloride to the solution;

c) maintaining the polymer solution at a predetermined temperature for a predetermined period; and

d) separating the polymerization solvent and pulverizing the polymer by pulping machine

## BACKGROUND OF THE INVENTION

(1) Field of the invention

This invention relates to aromatic polyamide pulp and a process for the preparation thereof. More particularly, the invention is concerned with aromatic polyamide pulp prepared by a process wherein Lewis acid type compounds and optionally inorganic salts are added and dissolved into amide type solvents, urea type solvents or the mixture thereof, followed by pouring an aromatic diamine and an aromatic diacid chloride in the resulting solvent to obtain highly polymerized aromatic polyamide pulp and a process thereof.

(2) Description of the prior art

Various processes for the preparation of aromatic polyamide pulps have been disclosed in the prior art. For example, U.S.-A-4,511,623 describes a process for the preparation of aromatic polyamide pulps with the use of a mixture of amide solvent, inorganic salts and tertiary amine as a solvent system. There are several disadvantages to the use of the excess amount tertiary amine. When it is applied, the polymerization and gelation proceeds so rapidly in a few seconds that the process cannot be controlled. Therefore the reproducibility is not so good. Particularly during gelation, molecular chains show isotropic property without orientation so that the polymer solution must be maintained for more than 5 hours to obtain fine fibrous pulp with high molecular weight. Furthermore that prior art process using tertiary amine compounds is very expensive because the tertiary amine compounds are very expensive. In addition the solubility of polymer is so low that the content ratio of polymer to polymerization solvent has to be kept at disadvantageously low levels.

Japanese Patent Publication No. 59.47694 (JP-B-59-47694) describes process for the preparation of a pulp like particle by reacting monomers in an amide type solvent for polymerization, immersing the resulting mixture in alcohol and pulverizing. However in this citation, the polymer solution with low inherent viscosity should be pulverized in water or alcohol so that the ultimate product has a low inherent viscosity of 2.0 - 3.5 dl/g and such a low intrinsic viscosity results in the deterioration of the properties of the polymer.

U.S.-A-4,876,040 describes a process in which a liquid crystalline polymer solution polymerized in a amide type polymerization solvent containing inorganic salt is pressed and sprayed together with a tertiary amine in a pulping machine. However such a process requires an excess amount of expensive tertiary amine so that the price of the product rises. Besides the excess use of tertiary amine raises environmental problems.

## SUMMARY OF THE INVENTION

Accordingly, an object of the present invention is to provide the excellent aromatic polyamide pulps with high moleecular weight and the process thereof which have several advantage over the process known heretofore. First, it is possible to simply prepare polymers without employing the additional pulping process. Second, the present process and their products are less expensive than those of the prior art using the expensive tertiary amine. Third, the present invention can reduce the environmental pollution without using tertiary amine which is detrimental to human.

In order to achieve the above objects, the present invention provides an aromatic polyamide pulp by the process wherein Lewis acid type compound selected from transition metal halide, Mg halide or the compound of halogen element combined with IIIA, IVA, VA or VIA group elements on the periodic table is added into amide and/or urea type organic type solvents, and optionally added inorganic salts of alkaline metal halide salt such as $CaCl_2$, LiCl, NaCl, KCl, LiBr, KBr, etc. The addition of a Lewis acid type compound increases the solubility without increase of the reaction rate so that the high molecular weight aromatic polyamide pulp can be prepared by the controllable condition. The term transition metal in this specification includes zinc and other metals in the same group of the periodic table. For the avoidance of doubt in this specification group IIIa is the group of the periodic table including boron and aluminium.

## BRIEF DESCRIPTION OF THE DRAWING

Fig. 1 is a diagrammatic illustration of the continuous process according to present invention to prepare the aromatic polyamide pulp.

DETAILED DESCRIPTION OF THE PREFERRED EMBODIMENTS

The present invention provides a process for the preparation of aromatic polyamide pulp containing homopolymer or copolymer with repeating unit expressed by the general formula (1) or (2)

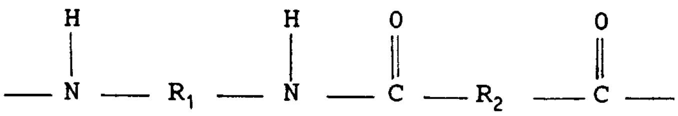 (1)

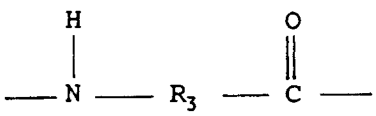 (2)

wherein each of $R_1$, $R_2$, $R_3$ represents one of the following aromatic group element,

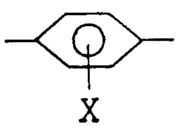, 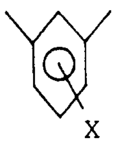, 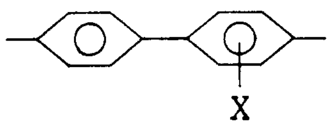, 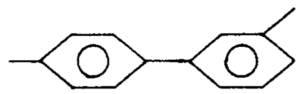,

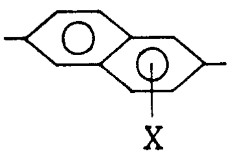, 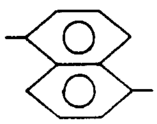, 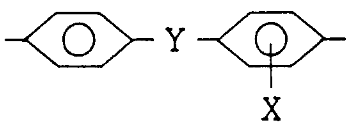, 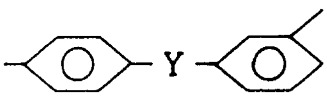

X is -H, -Cl, -Br, -I, $C_{1-4}$ alkyl group or $C_{1-4}$ alkoxy group, Y is

$-CH_2-$, 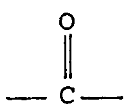, 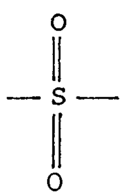, $-O-$, 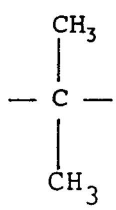, 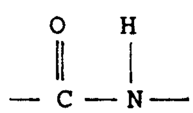

or 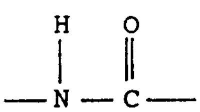

which comprises:

a) preparing a polymerization solvent by adding a Lewis acid type compound to an amide type organic solvent, an urea type organanic solvent or the mixture thereof;

b) obtaining anisotropic liquid crystal polymer solution prior to gelation by dissolving an aromatic diamine in the prepared polymerization solvent and adding an aromatic diacid chloride to the solution;

c) maintaining the polymer solution at a predetermined temperature for a predetermined period; and

d) separating the polymerization solvent and pulverizing the polymer by a pulping machine.

Furthermore the present invention provides an aromatic polyamide pulp containing homopolymer or copolymer with repeating unit expressed by the general formula (1) or (2) by the process which comprises:

a) preparing a polymerization solvent by adding a Lewis acid type compound to an amide type organic solvent, an urea type organic solvent or the mixture thereof;

b) obtaining anisotropic liquid crystal polymer solution prior to gelation by dissolving an aromatic diamine

in the prepared polymerization solvent and adding an aromatic diacid chloride to the solution;

c) maintaining the polymer solution at a predetermined temperature for a predetermined period; and

d) separating the polymerization solvent and pulverizing the polymer by a pulping machine.

The step (d) of the process invention can be carried out by one of the following techniques:

One process is that after the polymer is immersed in water, aqueous basic solution or the mixed coagulating solution of polymerization solvent with either water or an aqueous basic solution to extract the polymerization solvent from the polymer, the polymer is pulverized by a pulping machine.

Another process can be carried out by the process wherein without separating the polymer from the polymerization solvent the polymer is pulverized and then dried.

Furthermore the present invention may be carried out in a continuous process as well as in a batch process. The present invention as a continuous process provides a process for the preparation of an aromatic polyamide pulp containing homopolymer or copolymer with repeating unit expressed by the general formula (1) or (2) which comprises:

a) preparing a polymerization solvent by adding a Lewis acid type compound to an amide type organic solvent, an urea type organic solvent or the mixture thereof;

b) obtaining anisotropic liquid crystal polymer solution prior to gelation by dissolving an aromatic diamine in the prepared polymerization solvent and adding an aromatic diacid chloride to the solution;

c) continuously discharging the crystal polymer solution into a maturing container;

d) maintaining the polymer solution at a predetermined temperature for a predetermined period; and

e) separating the polymerization solvent and pulverizing the polymer by a pulping machine.

In addition, the present invention provides an aromatic polyamide pulp containing homopolymer or copolymer with repeating unit expressed by the general formula (1) or (2) by the process which comprises:

a) preparing a polymerization solvent by adding a Lewis acid type compound to an amide type organic solvent, an urea type organic solvent or the mixture thereof;

b) obtaining anisotropic liquid crystal polymer solution prior to gelation by dissolving an aromatic diamine in the prepared polymerization solvent and adding an aromatic diacid chloride to the solution;

c) continuously discharging the crystal polymer solution into a maturing container;

d) maintaining the polymer solution at a predetermined temperature for a predetermined period; and

e) separating the polymerization solvent and pulverizing the polymer by a pulping machine.

In this invention the repeating unit is usually of the general formula 1 above. Preferably $R^1$ is

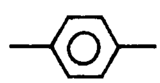

and preferably $R^2$ is

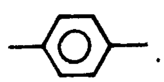

Thus where the repeat unit is of the preferred formula 1 the starting materials will have the formulae (3) and (4):

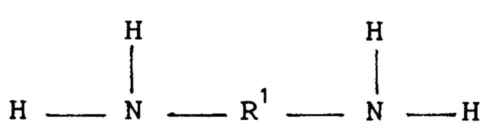

(3)

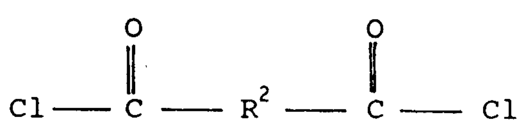

(4)

wherein $R^1$ and $R^2$ are as defined above.

The batch process according to the invention can be carried out in various ways. For instance, the predetermined amounts of organic solvents, a Lewis acid type compound and optionally inorganic salts is dissolved in a reactor, followed by adding the predetermined amount of an aromatic diamine and adding the predetermined amount of aromatic diacid chloride to this solution. While stirring, the polymerization proceeds to make the anisotropic liquid crystal polymer solution prior to gelation. In order to mature the resulting solution, the solution should maintain at a predetermined temperature for a predetermined period. The matured resulting polymer is immersed in water, aqueous basic solution or the mixed coagulating solution of polymerization solvent with one of water and aqueous basic solution or the mixed coagulating solution of polymerization solvent with one of water and aqueous basic solution to separate polymer from the polymerization solvent and then the polymer is pulverized. Alternatively, without separating polymer from the polymerization solvent the matured resulting polymer can be pulverized in a pulping machine with the mixed coagulating solution and dried obtain the aromatic polyamide pulp with high molecular weight having the desired properties.

In conjunction with the accompanying drawing, the continuous process according to the invention can be described as follows. First, after Lewis acid type compound and optionally inorganic salts is dissolved in the predetermined amount of organic solvent within the tank(1), the solution can be transferred into the preliminary polymerization tank(2) through the transfer line(3) transfer pump. The predetermined amount of aromatic diamine is added into the preliminary polymerization tank(2) under the controlled temperature with stirring to be completely dissolved. This preliminary mixture is transferred into the reactor(7) through transfer line(4). Simultaneously, an aromatic diacid chloride within the raw material reservoir tank(5) is transferred into the reactor(7) through transfer line(6) by a metering pump. Reaction of the transferred preliminary mixture solution and an aromatic diacid chloride proceeds to obtain the liquid crystal polymer solution, followed by continuously discharging the polymer solution into maturing container(9). In this container, the liquid crystal solution to be matured maintains at a predetermined temperature for a predetermined period. The matured polymer according to the above procedure can be immersed in water, aqueous basic solution or the mixed coagulating solution of the polymerization solvent with one of the above two solution to extract the polymerization solvent from the polymer. Alternatively, the matured polymer can be pulverized with the coagulating solutions and dried to obtain the high molecular weight aromatic polyamide pulp with the desired properties.

The process of the invention will become more apparent from following detailed description.

(A) Preparation of polymerization solvent

In order to make the polyamide, the present invention employs an amide type organic solvent, an urea type solvent or the mixed solvent thereof as polymerization solvent. These organic solvents can be selected from most of amide type and urea type organic solvents, preferably N-methyl-2-pyrrolidone(NMP),
N,N-dimethyl acetamide(DMAc), hexamethyl phosphoramide(HMPA), N,N,N,N'-tetramethylurea(TMU), N,N-dimethylformamide(DMF), dimethylsulfoxide(DMSO) or their mixture. In addition, into the polymerization solvent can be added Lewis acid type compound selected from transition metal halide or the compound of halogen element combined with IIIA, IVA, VA or VIA group elements on the periodic table. Preferably, Lewis acid type compound is selected from $BF_3$, $BCl_3$, $AlCl_3$, $FeCl_2$, $FeCl_3$, $ZnCl_2$, $SbCl_2$, $HgCl_2$, $MgCl_2$ etc. the preferred adding amount of Lewis acid type compound is 0.1 - 0.5 % by weight based on the organic solvent. If the amount of Lewis acid is less than 0.1 % by weight based on the organic solvent, the further increase in solubility and molecular weight of the ultimate polymer can not be expected. If the amount is more than 15 % by weight, the increase of adding amount have no more effect on solubility and molecular weight. Depending on the kinds of the Lewis acid type compound, they have a different ability of increase in solubility and molecular weight. For example, as $AlCl_3$ show higher increase in solubility and molecular weight than $HgCl_3$, in the case of using $AlCl_3$, the amount of added inorganic salts can be decreased.

In order to increase the solubility still more, the additional inorganic salts can be added into the polymerization solvent. It is newly found out that in the case of using the mixture of inorganic salts together with Lewis acid type compound, according to the increases of solubility the inherent viscosity of the pulp also increases. The inorganic salts can be selected from alkaline metal halide salt and alkaline earth metal halide salt such as. One or more inorganic salts can be added as the inorganic salt. Preferably the amount of added inorganic salts is not more than 12 % by weight based on the polymerization solvent. If the amount is more than 12 % by weight, the further increase of the effect can not be expected so that it is not economical.

As both of Lewis acid type compound and inorganic salts are used in the invention in order to increase

the solubility, the adding amounts of Lewis acid type compounds and inorganic salts are mutually dependence so that the increase of the adding amount of Lewis acid will cause the dependent of the amount of adding inorganic salts. Therefore the total amount of added Lewis acid type compound and inorganic salts is 2.0 - 25 % by weight, preferably 3.0 - 13 % by weight based on the organic solvent. If the total amount of the mixture of these compounds is less than 2.0 % by weight, the solubility and molecular weight of the resulting polymer will not increase. If the total amount of the mixture is more than 25 % by weight, the increase of adding amount have no more effect on solubility and molecular weight so that it is not economical. As described above, the polymerization solvent can be prepared by adding Lewis type compound and optionally inorganic salts into the amide type solvent, urea type solvent or the mixture thereof.

(B) Preparation of liquid crystal polymer solution.

In the resulting solution aromatic diamine is dissolved, followed by adding aromatic diacid chloride. Preferably the reaction temperature is 0 - 40 °C. If the reaction temperature is less than 0 °C, the reaction not proceed well and the solubility will decrease. If the reaction temperature is more than 40 °C, the reaction rate is so fast that the reaction terminating time cannot be controlled.

Preferably the reactants are added in such a manner that the reaction mixture contains the polymer in the amount of 3 - 30 % by weight based on the pure polymerization solvent. If the amount of the polymer is less than 3% by weight, although the high molecular weight polyamide pulp can be obtained, the used amount of polymerization solvent is so increased that it is not economical. If the amount of the polymer is more than 30 % by weight, it is impossible to obtain high molecular weight polyamide pulp because of the decrease of solubility and molecular weight. The above reaction of the aromatic diamine and aromatic diacid chloride should proceed until the solution become the anisotropic liquid crystal polymer solution prior to gelation with inherent viscosity of 1.0 - 3.0. If the above reaction terminate at isotropic state prior to liquid crystal polymer solution state, the form and properties of the resulting polyamide pulp is qualitatively deteriorated.

(C) Maturation of liquid crystal polymer solution.

In order to the resulting anisotropic liquid crystal polymer solution prior to gelation should maintain under the predetermined condition. It is preferable to maintain at the temperature of 25 - 100 °C for more than 0.5 hour. However, if the maturing period is so long, the degree of maturity is increasing. It means the increase of inherent viscosity and the degree of molecular orientation of polymer. If the period is more than 5 hours, the increasing rate of the degree of maturity to maturing period sharply drops. Therefore economically it is preferable that the maturing period is 0.5 - 5 hours. If the maturing temperature is less than 25 °C, then the maturing time requires so long period. If the maturing temperature rises over than 100 °C, the viscosity of polyamide pulp decreases so that the properties is deteriorated.

(E) Extraction of polymerization solvent

The polymerization solvent can be extracted from the polymer by immersing the matured polymer in water, aqueous basic solution or the mixed coagulating solution of polymerization solvent with the above solutions. Alternatively, without extraction of polymerization solvent, the matured polymer is added into pulping machine together with the coagulating solution, followed by pulverizing and drying to obtain the desired product. The aqueous basic solution can be selected from aqueous solution of NaOH, KOH, $Na_2CO_3$, $Ca(OH)_2$, CaO etc. Preferably the concentration of these solutions is 0.1 - 20 % by weight. If the concentration of aqueous solution is less than 0.1 % by weight, the concentration is so diluted that it dose not show any effect. If the concentration of aqueous solution is not less than 20 % by weight, the increase in neutralizing power and inherent viscosity can not be expected.

(F) Preparation of polyamide pulp

The resulting polyamide polymer is pulverized and dried by known pulping machines to obtain polyamide pulp. The pulping machine is already known so that the detailed description about the pulping machines will be omitted.

According to the above described procedure, the polyamide pulp containing homopolymer or copolymer can be obtained which has a repeating unit expressed by the general formula (I) or (II).

The polyamide pulp according to the invention is characterized by having an inherent viscosity of 4.0 or higher, a dimension of 0.1 mm - 5 cm in length, 1 µm - 200 µm in diameter, a crystallinity of more than 45 %, apparent crystallite size of more than 40 Å and specific surface area of more than 4.0 $m^2$/g. According to pulverizing condition, it is possible to prepare the pulp like fibers with the length of more than 2 cm which have a characteristics of the average number of the microfibril branched at the fiber of less than 10/mm.

The important effect of the invention is that without using an expensive tertiary amine, the high molecular weight aromatic polyamide pulp can be prepared by adding Lewis acid type compound selected from transition metal halide or the compound of halogen element combined with IIIA, IVA, VA or VIA group element on the periodic table into amide and/or urea type organic type solvents, and optionally adding inorganic salts of alkaline metal halide or alkali earth metal halide salt such as $CaCl_2$, LiCl, NaCl, KCl, LiBr, KBr, etc. The addition of a Lewis acid type compound increase the solubility without increase of the reaction speed so that the high molecular weight aromatic polyamide pulp can be prepared by the controllable condition.

Because of adding the Lewis acid type compound, the continuous process according to the invention provides the high molecular weight pulp only by elongation force from free falling without additional shear force or orientation.

The inherent viscosity (I.V.) of the polymer is defined as

$$\text{I.V. (dl/g)} = \ln(\eta_{rel})/C$$

where C represents the concentration of 0.5 g of polymer in 100 ml of 95-98% by weight of sulfuric acid and relative viscosity, $\eta_{rel}$ is the ratio of the flow time between a polymer solution and solvent of 95-98% by weight of conc. sulfuric acid. The flow time is determined at 30 °C by an Ostwald capillary viscometer.

The preferred examples of the present invention and comparative examples will be described below. However these examples are provided only to facilitate that the present invention can be more easily understood and the present invention is not limited to these examples.

Example 1

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 15 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The physical and chemical properties of the obtained pulp are as follows;

| | |
|---|---|
| inherent viscosity | 6.3 |
| crystallinity | 56 % |
| specific surface area | 7.2 $m^2$/g |
| length | 0.1 mm - 5 cm and |
| diameter | 1 µm - 200 µm |

Example 2

After a 2 l reactor was completely dried by sufficient purge with nitrogen, 500 ml of N-methyl-2-pyrrolidone(NMP) was charged into the reactor, followed by adding 25 g of $CaCl_2$ and 20 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution prior to gelation. Then the temperature of the solution was raised

to 60 °C and the solution was maintained for 5 hours. At the end of this period, without separating the polymerization solvent, the polymer solution was charged into a pulping machine with a mixed coagulating solution of 55 parts by weight of water and 45 parts by weight of NMP in which CaCl was dissolved. The total mixture was pulverized in the pulping machine and dried to prepare pulp.

The physical and chemical properties of the obtained pulp are as follows;

| | |
|---|---|
| inherent viscosity<br>crystallinity<br>specific surface area<br>length<br>diameter | 7.1<br>57 %<br>8.4 $m^2/g$<br>0.1 mm - 5 cm and<br>1 µm - 200 µm |

Example 3

After a 2 l reactor was completely dried by sufficient purge with nitrogen, 500 ml of N-methyl-2-pyrrolidone(NMP) was charged into the reactor, followed by adding 20 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution prior to gelation. Then the temperature of the solution was raised to 60 °C and the solution was maintained for 2 hours. At the end of this period, the polymer was immersed in 10 % aqueous NaOH solution to extract the polymerization solvent from the polymer, thereby separating polymer. The separated polymer was pulverized in a pulping machine and dried to prepare pulp.

The physical and chemical properties of the obtained pulp are as follows;

| | |
|---|---|
| inherent viscosity<br>crystallinity<br>specific surface area<br>length<br>diameter | 6.2<br>53 %<br>6.9 $m^2/g$<br>0.1 mm - 5 cm and<br>1 µm - 200 µm |

Example 4

After a 2 l reactor was completely dried by sufficient purge with nitrogen, 500 ml of N-methyl-2-pyrrolidone(NMP) was charged into the reactor, followed by adding 30 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution prior to gelation. Then the temperature of the solution was raised to 70 °C and the solution was maintained for 0.5 hour. At the end of this period, the polymer was immersed in water to extract the polymerization solvent from the polymer, thereby separating polymer. The separated polymer was pulverized in a pulping machine and dried to prepare pulp.

The physical and chemical properties of the obtained pulp are as follows;

| | |
|---|---|
| inherent viscosity<br>crystallinity<br>specific surface area<br>length<br>diameter | 5.1<br>50 %<br>5.6 $m^2/g$<br>0.1 mm - 5 cm and<br>1 µm - 200 µm |

Example 5

After a 2 l reactor was completely dried by sufficient purge with nitrogen, 400 ml of N-methyl-2-pyrrolidone(NMP) was charged into the reactor, followed by adding 20 g of $CaCl_2$ and 15 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution prior to gelation. Then the temperature of the solution was raised to 80 °C and the solution was maintained for 2 hours. At the end of this period, without separating the polymerization solvent, the polymer solution was charged into a pulping machine with a mixed coagulating solution of 70 parts by weight of water and 30 parts by weight of NMP in which CaCl was dissolved. The total mixture was pulverized in the pulping machine and dried to prepare pulp.

The physical and chemical properties of the obtained pulp are as follows;

| | |
|---|---|
| inherent viscosity | 6.1 |
| crystallinity | 52 % |
| specific surface area | 6.5 $m^2/g$ |
| length | 0.1 mm - 5 cm and |
| diameter | 1 µm - 200 µm |

Example 6

After a 2 l reactor was completely dried by sufficient purge with nitrogen, 1000 ml of N-methyl-2-pyrrolidone(NMP) was charged into the reactor, followed by adding 20 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The physical and chemical properties of the obtained pulp are as follows;

| | |
|---|---|
| inherent viscosity | 7.5 |
| crystallinity | 59 % |
| specific surface area | 10.3 $m^2/g$ |
| length | 0.1 mm - 5 cm and |
| diameter | 1 µm - 200 µm |

Example 7

After a 2 l reactor was completely dried by sufficient purge with nitrogen, 500 ml of N-methyl-2-pyrrolidone(NMP) was charged into the reactor, followed by adding 30 g of $CaCl_2$ and 5 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The physical and chemical properties of the obtained pulp are as follows;

| | |
|---|---|
| inherent viscosity | 5.7 |
| crystallinity | 52 % |
| specific surface area | 6.8 $m^2/g$ |
| length | 0.1 mm - 5 cm and |
| diameter | 1 µm - 200 µm |

Example 8

After a 2 l reactor was completely dried by sufficient purge with nitrogen, 500 ml of N-methyl-2-pyrrolidone(NMP) was charged into the reactor, followed by adding 30 g of $CaCl_2$ and 5 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 ° C by cooling with water and ice, followed by adding 45.95 g of terephthaloyl chloride, and polymerizing with vigorous stirring, to obtain liquid crystalline polymer solution prior to gelation. Then the temperature of the solution was raised to 50 ° C and the solution was maintained for 5 hours. At the end of this period, the polymer was immersed in aqueous 1 % KOH solution to extract the polymerization solvent from the polymer, thereby separating polymer. The separated polymer was pulverized in a pulping machine and dried to prepare pulp.

The physical and chemical properties of the obtained pulp are as follows;

| | |
|---|---|
| inherent viscosity | 4.4 |
| crystallinity | 48 % |
| specific surface area | 5.8 $m^2/g$ |
| length | 0.1 mm - 5 cm and |
| diameter | 1 µm - 200 µm |

Example 9

After 50000 ml of N-methyl-2-pyrrolidone(NMP) was charged into a tank(1) for preparing polymerization solvent, 2500 g of $CaCl_2$ and 1000 g of $MgCl_2$ was added and dissolved completely to prepare a preliminary polymerization solvent, which was transferred to a preliminary polymerization tank(2) through a transfer line(3) by using a transfer pump. Subsequently, 2450 g of 1,4-phenylenediamine(PPD) was added into the preliminary polymerization tank(2) and dissolved.

After the temperature of the completely dissolved resulting solution was lowered to 20 ° C, it was transferred to a reactor(7) through a transfer line(4) by using a metering pump. At this time, the solution was controlled to be charged continuously by constant amounts into the reactor(7). At the same time, 4596 g of terephthaloyl chloride contained in a raw material-reserving tank(5) was controlled to be charged continuously into the reactor(7) through a transfer line(6). At this time, the amounts of PPD solution and TPC were controlled to be equal molar amounts Then the mixture in the reactor(7) was reacted to prepare a liquid crystalline polymer solution, which was then discharged continuously through a discharge opening(8) into a maturing container(9).

The liquid crystalline polymer solution contained in the container was raised to 50 ° C and was maintained for 2 hours. At the end of this period, the polymer was cut to an appropriate size and was charged into a pulping machine together with the mixed coagulating solution of 95 parts by weight of water and 5 parts by weight of NMP in which $CaCl_2$ was dissolved. The total mixture was pulverized in the pulping machine and dried to prepare pulp.

The physical and chemical properties of the obtained pulp are as follows;

| | |
|---|---|
| inherent viscosity<br>crystallinity<br>specific surface area<br>length<br>diameter | 6.8<br>57 %<br>9.5 $m^2/g$<br>0.1 mm - 5 cm and<br>1 $\mu m$ - 200 $\mu m$ |

Example 10

After 50000 ml of N-methyl-2-pyrrolidone(NMP) was charged into a tank(1) for preparing polymerization solvent, 3000 g of $CaCl_2$ and 100 Kg of $MgCl_2$ was added and dissolved completely to prepare a preliminary polymerization solvent, which was transferred to a preliminary polymerization tank(2) through a transfer line(3) by using a transfer pump. Subsequently, 2450 g of 1,4-phenylenediamine(PPD) was added into the preliminary polymerization tank(2) and dissolved.

After the temperature of the completely dissolved resulting solution was lowered to 20 °C, it was transferred to a reactor(7) through a transfer line(4) by using a metering pump. At this time, the solution was controlled to be charged continuously by constant amounts into the reactor(7). At the same time, 4596 g of terephthaloyl chloride contained in a raw material-reserving tank(5) was controlled to be charged continuously into the reactor(7) through a transfer line(6). At this time, the amounts of PPD solution and TPC were controlled to be equal molar amounts Then the mixture in the reactor(7) was reacted to prepare a liquid crystalline polymer solution, which was then discharged continuously through a discharge opening(8) into a maturing container(9).

The liquid crystalline polymer solution contained in the container was raised to 50 °C and was maintained for 5 hours. At the end of this period, the polymer was cut to an appropriate size and was immersed into aqueous 5 % KOH solution to extract the polymerization solvent, thereby separating the polymer. The separated polymer was pulverized in a pulping machine and dried to prepare pulp.

The physical and chemical properties of the obtained pulp are as follows;

| | |
|---|---|
| inherent viscosity<br>crystallinity<br>specific surface area<br>length<br>diameter | 5.3<br>50 %<br>5.1 $m^2/g$<br>0.1 mm - 5 cm and<br>1 $\mu m$ - 200 $\mu m$ |

Example 11

After a 2 l reactor was completely dried by sufficient purge with nitrogen, 400 ml of N-methyl-2-pyrrolidone(NMP) was charged into the reactor, followed by adding 30 g of $BF_3$ into the solvent, mixing until completely dissolved to prepare the preliminary polymerization solvent the temperature of which was raised to 40 °C and then adding and dissolving 24.5 g of 1,4-phenylene diamine.

After holding the resulting solution for 5 minutes, the temperature was lowered to 10 °C by cooling with water and ice, followed by adding 45.95 g of terephthaloyl chloride, and polymerizing with vigorous stirring, to obtain liquid crystalline polymer solution prior to gelation. Then the temperature of the solution was raised to 40 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The measured inherent viscosity of the obtained pulp is 4.3

Example 12

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 15 °C by cooling with

water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The measured inherent viscosity of the obtained pulp is 6.3

Example 13

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 15 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in aqueous 5 wt % NaOH solution to extract the polymerization solvent from the polymer, thereby separating polymer. The separated polymer was pulverized in a pulping machine and dried to prepare pulp.

The measured inherent viscosity of the obtained pulp is 6.5

Example 14

After a 2 l reactor was completely dried by sufficient purge with nitrogen, 500 ml of N-methyl-2-pyrrolidone(NMP) was charged into the reactor, followed by adding 25 g of $CaCl_2$ and 20 g of $ZnCl_2$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 15 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in aqueous 5 wt % NaOH solution to extract the polymerization solvent from the polymer, thereby separating polymer. The separated polymer was pulverized in a pulping machine and dried to prepare pulp.

The measured inherent viscosity of the obtained pulp is 5.2.

Example 15

After a 2 l reactor was completely dried by sufficient purge with nitrogen, 500 ml of N-methyl-2-pyrrolidone(NMP) was charged into the reactor, followed by adding 25 g of $CaCl_2$ and 20 g of $FeCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 15 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in aqueous 5 wt % NaOH solution to extract the polymerization solvent from the polymer, thereby separating polymer. The separated polymer was pulverized in a pulping machine and dried to prepare pulp.

The measured inherent viscosity of the obtained pulp is 4.9.

Example 16

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 5 °C by cooling with water and ice, followed by adding 45.95 g of terephthaloyl chloride, and polymerizing with vigorous stirring, to obtain liquid crystalline polymer solution prior to gelation. Then the temperature of the solution was raised

to 50 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The measured inherent viscosity of the obtained pulp is 6.1.

Example 17

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 0 °C by cooling with water and ice, followed by adding 45.95 g of terephthaloyl chloride, and polymerizing with vigorous stirring, to obtain liquid crystalline polymer solution prior to gelation. Then the temperature of the solution was raised to 50 °C and the solution was maintained for 2 hours. At the end of this period, the polymer was immersed in water to extract the polymerization solvent from the polymer, thereby separating polymer. The separated polymer was pulverized in a pulping machine and dried to prepare pulp.

The measured inherent viscosity of the obtained pulp is 5.8.

Example 18

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 0 °C by cooling with water and ice, followed by adding 45.95 g of terephthaloyl chloride, and polymerizing with vigorous stirring, to obtain liquid crystalline polymer solution prior to gelation. Then the temperature of the solution was raised to 100 °C and the solution was maintained for 0.5 hour. At the end of this period, the polymer was immersed in water to extract the polymerization solvent from the polymer, thereby separating polymer. The separated polymer was pulverized in a pulping machine and dried to prepare pulp.

The measured inherent viscosity of the obtained pulp is 5.1.

Example 19

After a 2 l reactor was completely dried by sufficient purge with nitrogen, 500 ml of N-methyl-2-pyrrolidone(NMP) was charged into the reactor, followed by adding 25 g of $CaCl_2$ and 20 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution prior to gelation. Then the temperature of the solution was raised to 60 °C and the solution was maintained for 5 hours. At the end of this period, without separating the polymerization solvent, the polymer solution was charged into a pulping machine with a mixed coagulating solution of 55 wt % by weight of water and 45 wt % by weight of polymerization solvent. The total mixture was pulverized in the pulping machine and dried to prepare pulp.

The measured inherent viscosity of the obtained pulp is 7.1.

Example 20

After a 2 l reactor was completely dried by sufficient purge with nitrogen, 500 ml of N-methyl-2-pyrrolidone(NMP) was charged into the reactor, followed by adding 20 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution prior to gelation. Then the temperature of the solution was raised to 60 °C and the solution was maintained for 5 hour. At the end of this period, the polymer was immersed

in water to extract the polymerization solvent from the polymer, thereby separating polymer. The separated polymer was pulverized in a pulping machine and dried to prepare pulp.

The measured inherent viscosity of the obtained pulp is 6.0.

Example 21 to 23

The procedure of Examples 20 was repeated except that Lewis acid compound and coagulating solution listed in the Table 1 below were used instead of those used in Example 20, thereby preparing aromatic polyamide pulp. The measured inherent viscosities of the obtained pulps are listed in the Table 1

Table 1

| Example | Lewis acid | coagulating solution | inherent viscosity |
|---|---|---|---|
| 21 | $AlCl_3$: 10 g | aqueous 10 wt % NaOH solution | 6.2 |
| 22 | $HgCl_2$: 10 g | water | 4.5 |
| 23 | $SbCl_2$: 10 g | water | 4.3 |

Example 24

After a 2 l reactor was completely dried by sufficient purge with nitrogen, 500 ml of N-methyl-2-pyrrolidone(NMP) was charged into the reactor, followed by adding 30 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution. Then the temperature of the solution was raised to 70 °C and the solution was maintained for 0.5 hour. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 5.1.

Example 25

After a 2 l reactor was completely dried by sufficient purge with nitrogen, 500 ml of N-methyl-2-pyrrolidone(NMP) was charged into the reactor, followed by adding 30 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution. Then the temperature of the solution was raised to 70 °C and the solution was maintained for 3 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 5.5.

Example 26

After a 2 l reactor was completely dried by sufficient purge with nitrogen, 400 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution. Then the temperature of the solution was raised to 60 °C and the solution was maintained for 4 hours. At the end of this period, the polymer was immersed in water to extract the polymerization solvent from the polymer, thereby separating polymer. The separated polymer

was pulverized in a pulping machine and dried to prepare the pulp.

The measured inherent viscosity of obtained pulp is 5.8.

Example 27 to 29

The procedure of Examples 26 was repeated except that coagulating solution listed in the Table 2 below were used instead of that used in Example 26, thereby preparing aromatic polyamide pulp. The measured inherent viscosities of the obtained pulps are listed in the Table 2.

Table

| Example | coagulating solution | inherent viscosity |
|---|---|---|
| 27 | aqueous 20 wt % NaOH solution | 6.2 |
| 28 | aqueous 10 wt % $NaHCO_3$ solution | 6.0 |
| 29 | aqueous 10 wt % KOH solution | 6.1 |

Example 30

After a 2 l reactor was completely dried by sufficient purge with nitrogen, 400 ml of N-methyl-2-pyrrolidone(NMP) was charged into the reactor, followed by adding 20 g of $CaCl_2$ and 15 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution. Then the temperature of the solution was raised to 80 °C and the solution was maintained for 2 hours. At the end of this period, without separating the polymerizing solvent, the polymer solution was charged into a pulping machine with a mixed coagulating solution of 70 wt % of water and 30 wt % of the polymerization solvent. Total mixture was pulverized in the pulping machine and dried to prepare pulp.

The measured inherent viscosity of obtained pulp is 6.1.

Example 31

After a 2 l reactor was completely dried by sufficient purge with nitrogen, 400 ml of N-methyl-2-pyrrolidone(NMP) was charged into the reactor, followed by adding 10 g of $CaCl_2$ and 30 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 °C by cooling with water and ice, followed by adding 45.95 g of terephthaloyl chloride, and polymerizing with vigorous stirring, to obtain liquid crystalline polymer solution. Then the temperature of the solution was raised to 60 °C and the solution was maintained for 4 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 6.4.

Example 32

After a 2 l reactor was completely dried by sufficient purge with nitrogen, 400 ml of N-methyl-2-pyrrolidone(NMP) was charged into the reactor, followed by adding 30 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 35 °C by cooling with water and ice, followed by adding 45.95 g of terephthaloyl chloride, and polymerizing with vigorous stirring, to obtain liquid crystalline polymer solution. Then the temperature of the solution was raised to 60 °C and the solution was maintained for 4 hours. At the end of this period, the polymer was immersed in water to extract the polymerization solvent from the polymer, thereby separating polymer. The separated polymer

was pulverized in a pulping machine and dried to prepare the pulp.

The measured inherent viscosity of obtained pulp is 4.5.

Example 33

After a 2 l reactor was completely dried by sufficient purge with nitrogen, 300 ml of N-methyl-2-pyrrolidone(NMP) was charged into the reactor, followed by adding 25 g of $CaCl_2$ and 15 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 ° C by cooling with water and ice, followed by adding 45.95 g of terephthaloyl chloride, and polymerizing with vigorous stirring, to obtain liquid crystalline polymer solution. Then the temperature of the solution was raised to 50 ° C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 5.6.

Example 34

After a 2 l reactor was completely dried by sufficient purge with nitrogen, 200 ml of hexamethyl phosphoramide(HMPA) and 100 ml of N-methyl-2-pyrrolidone(NMP) was charged into the reactor, followed by adding 25 g of $CaCl_2$ and 15 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 ° C by cooling with water and ice, followed by adding 45.95 g of terephthaloyl chloride, and polymerizing with vigorous stirring, to obtain liquid crystalline polymer solution. Then the temperature of the solution was raised to 50 ° C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 6.0.

Example 35

After a 2 l reactor was completely dried by sufficient purge with nitrogen, 300 ml of N-methyl-2-pyrrolidone(NMP) was charged into the reactor, followed by adding 17 g of LiCl and 15 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 ° C by cooling with water and ice, followed by adding 45.95 g of terephthaloyl chloride, and polymerizing with vigorous stirring, to obtain liquid crystalline polymer solution. Then the temperature of the solution was raised to 50 ° C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 5.6.

Example 36

After a 2 l reactor was completely dried by sufficient purge with nitrogen, 300 ml of N-dimethylacetamide(DMAc) was charged into the reactor, followed by adding 20 g of LiCl and 15 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 ° C by cooling with water and ice, followed by adding 45.95 g of terephthaloyl chloride, and polymerizing with vigorous stirring, to obtain liquid crystalline polymer solution. Then the temperature of the solution was raised to 50 ° C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 4.9.

Example 37

After a 2 l reactor was completely dried by sufficient purge with nitrogen, 200 ml of hexamethyl phosphoramide(HMPA) and 100 ml of N-methyl-2 pyrrolidone(NMP) was charged into the reactor, followed by adding 25 g of $CaCl_2$ and 15 g of $ZnCl_2$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 °C by cooling with water and ice, followed by adding 45.95 g of terephthaloyl chloride, and polymerizing with vigorous stirring, to obtain liquid crystalline polymer solution. Then the temperature of the solution was raised to 50 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 4.7.

Example 38

After a 2 l reactor was completely dried by sufficient purge with nitrogen, 1000 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 25 °C by cooling with water and ice, followed by adding 45.95 g of terephthaloyl chloride, and polymerizing with vigorous stirring, to obtain liquid crystalline polymer solution. Then as the temperature of the solution was being hold at 50 °C and the solution was maintained for 2 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 7.5.

Example 39

After a 2 l reactor was completely dried by sufficient purge with nitrogen, 200 ml of N-methyl-2-pyrrolidone(NMP) was charged into the reactor, followed by adding 20 g of $CaCl_2$ and 20 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution. Then the temperature of the solution was raised to 40 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 4.2.

Example 40

After a 2 l reactor was completely dried by sufficient purge with nitrogen, 150 ml of hexamethylphosphoramide(HMPA) and 50 ml of N-methyl-2-pyrrolidone(NMP) was charged into the reactor, followed by adding 20 g of $CaCl_2$ and 20 g of $BCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, followed by adding 45.95 g of terephthaloyl chloride, and polymerizing with vigorous stirring, to obtain liquid crystalline polymer solution. Then the temperature of the solution was raised to 40 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 4.3.

Example 41

After a 2 l reactor was completely dried by sufficient purge with nitrogen, 500 ml of N-methyl-2-pyrrolidone(NMP) was charged into the reactor, followed by adding 30 g of $CaCl_2$ and 5 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution. Then the temperature of the solution was raised to 50 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 5.7.

Example 42

After a 2 l reactor was completely dried by sufficient purge with nitrogen, 500 ml of N-methyl-2-pyrrolidone(NMP) was charged into the reactor, followed by adding 30 g of $CaCl_2$ and 5 g of $ZnCl_2$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution. Then the temperature of the solution was raised to 50 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 4.3.

Example 43

After a 2 l reactor was completely dried by sufficient purge with nitrogen, 500 ml of N-methyl-2-pyrrolidone(NMP) was charged into the reactor, followed by adding 30 g of $CaCl_2$ and 5 g of $FeCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution. Then the temperature of the solution was raised to 50 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 4.4.

Example 44

After a 2 l reactor was completely dried by sufficient purge with nitrogen, 500 ml of N-methyl-2-pyrrolidone(NMP) was charged into the reactor, followed by adding 30 g of $CaCl_2$ and 1.0 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 20 °C by cooling with water and ice, followed by adding 45.95 g of terephthaloyl chloride, and polymerizing with vigorous stirring, to obtain liquid crystalline polymer solution. Then the temperature of the solution was raised to 50 °C and the solution was maintained for 5 hours. At the end of this period, the polymer was immersed in aqueous 1 wt % KOH solution to extract the polymerization solvent from the polymer, thereby separating polymer. The separated polymer was pulverized in a pulping machine and dried to prepare the pulp.

The measured inherent viscosity of obtained pulp is 4.4.

Example 45

After 50000 ml of N-methyl-2-pyrrolidone(NMP) was charged into a tank(1) for preparing polymerization solvent, 500 g of $CaCl_2$ and 3000 g of $AlCl_3$ was added and dissolved completely to prepare a preliminary

polymerization solvent, which was transferred to a preliminary polymerization tank(2) through a transfer line-(3) by using a transfer pump. Subsequently, 2450 g of 1,4-phenylenediamine(PPD) was added into the preliminary tank(2) and dissolved.

After the temperature of the completely dissolved resulting solution was lowered to 30 ° C, it was transferred to a reactor(7) through a transfer line(4) by using a metering pump. At this time, the solution was controlled to be charged continuously by constant amounts into the reactor(7). At the same time, 4595 g of terephthaloyl chloride contained in a raw materials reserving tank(5) was controlled to be charged continuously into the reactor(7) through a Transfer a line(6). At this time, the amounts of PPD solution and TPC were controlled to be equal molar amount. Then the mixture in the reactor(7) was reacted to prepare a liquid crystalline polymer solution, which was then discharged continuously through a discharge opening(8) into a maturing container(9).

The liquid crystalline polymer solution contained in the container was raised to 70 ° C and was maintained for 0.5 hour. At the end of this period, the polymer was cut to an appropriate size and was immersed into water to extract the polymerization solvent, thereby separating the polymer. The separated polymer was pulverized in a pulping machine and dried to prepare pulp.

The measured inherent viscosity of the obtained is 5.8.

Example 46

After 40000 ml of hexamethyl phosphoramide(HMPA) and 10000 ml of N,N,N',N'-tetramethylurea(TMU) was charged into a tank(1) for preparing polymerization solvent, 3000 g of $AlCl_3$ was added and dissolved completely to prepare a preliminary polymerization solvent, which was transferred to a preliminary polymerization tank(2) through a transfer line(3) by using a transfer pump. Subsequently, 2450 g of 1,4-phenylenediamine(PPD) was added into the preliminary tank(2) and dissolved.

After the temperature of the completely dissolved resulting solution was lowered to 30 ° C, it was transferred to a reactor(7) through a transfer line(4) by using a metering pump. At this time, the solution was controlled to be charged continuously by constant amounts into the reactor(7). At the same time, 4595 g of terephthaloyl chloride contained in a raw materials reserving tank(5) was controlled to be charged continuously into the reactor(7) through a Transfer a line(6). At this time, the amounts of PPD solution and TPC were controlled to be equal molar amount. Then the mixture in the reactor(7) was reacted to prepare a liquid crystalline polymer solution, which was then discharged continuously through a discharge opening(8) into a maturing container(9).

The liquid crystalline polymer solution contained in the container was raised to 70 ° C and was maintained for 3 hours. At the end of this period, the polymer was cut to an appropriate size and was immersed into water to extract the polymerization solvent, thereby separating the polymer. The separated polymer was pulverized in a pulping machine and dried to prepare pulp.

The measured inherent viscosity of the obtained is 5.3.

Example 47

After 50000 ml of N-methyl-2-pyrrolidone(NMP) was charged into a tank(1) for preparing polymerization solvent, 2500 g of $CaCl_2$ and 1000 g of $MgCl_2$ was added and dissolved completely to prepare a preliminary polymerization solvent, which was transferred to a preliminary polymerization tank(2) through a transfer line(3) by using a transfer pump. Subsequently, 2450 g of 1,4-phenylenediamine(PPD) was added into the preliminary tank(2) and dissolved.

After the temperature of the completely dissolved resulting solution was lowered to 20 ° C, it was transferred to a reactor(7) through a transfer line(4) by using a metering pump. At this time, the solution was controlled to be charged continuously by constant amounts into the reactor(7). At the same time, 4595.8 g of terephthaloyl chloride contained in a raw materials reserving tank(5) was controlled to be charged continuously into the reactor(7) through a Transfer a line(6). At this time, the amounts of PPD solution and TPC were controlled to be equal molar amount. Then the mixture in the reactor(7) was reacted to prepare a liquid crystalline polymer solution, which was then discharged continuously through a discharge opening(8) into a maturing container(9).

The liquid crystalline polymer solution contained in the container was raised to 50 ° C and was maintained for 2 hours. At the end of this period, the polymer was cut to an appropriate size and was charged into a pulping machine together with a mixed coagulating solution of 95 wt % of water and 5 wt % of polymerization solvent. The mixture was pulverized in the pulping machine and dried to prepare pulp.

The measured inherent viscosity of the obtained is 6.8.

Example 48

After 40000 ml of N-methyl-2-pyrrolidone(NMP) was charged into a tank(1) for preparing polymerization solvent, 1000 g of $CaCl_2$ and 2500 g of $AlCl_3$ was added and dissolved completely to prepare a preliminary polymerization solvent, which was transferred to a preliminary polymerization tank(2) through a transfer line-(3) by using a transfer pump. Subsequently, 2450 g of 1,4-phenylenediamine(PPD) was added into the preliminary tank(2) and dissolved.

After the temperature of the completely dissolved resulting solution was lowered to 20 °C, it was transferred to a reactor(7) through a transfer line(4) by using a metering pump. At this time, the solution was controlled to be charged continuously by constant amounts into the reactor(7). At the same time, 4595 g of terephthaloyl chloride contained in a raw materials reserving tank(5) was controlled to be charged continuously into the reactor(7) through a Transfer a line(6). At this time, the amounts of PPD solution and TPC were controlled to be equal molar amount. Then the mixture in the reactor(7) was reacted to prepare a liquid crystalline polymer solution, which was then discharged continuously through a discharge opening(8) into a maturing container(9).

The liquid crystalline polymer solution contained in the container was raised to 60 °C and was maintained for 4 hours. At the end of this period, the polymer was cut to an appropriate size and was immersed into water to extract the polymerization solvent, thereby separating the polymer. The separated polymer was pulverized in a pulping machine and dried to prepare pulp.

The measured inherent viscosity of the obtained is 5.9.

Example 49

After 70000 ml of N-methyl-2-pyrrolidone(NMP) was charged into a tank(1) for preparing polymerization solvent, 2000 g of $CaCl_2$ and 500 g of $AlCl_3$ was added and dissolved completely to prepare a preliminary polymerization solvent, which was transferred to a preliminary polymerization tank(2) through a transfer line-(3) by using a transfer pump. Subsequently, 2450 g of 1,4-phenylenediamine(PPD) was added into the preliminary tank(2) and dissolved.

After the temperature of the completely dissolved resulting solution was lowered to 25 °C, it was transferred to a reactor(7) through a transfer line(4) by using a metering pump. At this time, the solution was controlled to be charged continuously by constant amounts into the reactor(7). At the same time, 4595 g of terephthaloyl chloride contained in a raw materials reserving tank(5) was controlled to be charged continuously into the reactor(7) through a Transfer a line(6). At this time, the amounts of PPD solution and TPC were controlled to be equal molar amount. Then the mixture in the reactor(7) was reacted to prepare a liquid crystalline polymer solution, which was then discharged continuously through a discharge opening(8) into a maturing container(9).

The liquid crystalline polymer solution contained in the container was raised to 50 °C and was maintained for 2 hours. At the end of this period, the polymer was cut to an appropriate size and was immersed into water to extract the polymerization solvent, thereby separating the polymer. The separated polymer was pulverized in a pulping machine and dried to prepare pulp.

The measured inherent viscosity of the obtained is 6.5.

Example 50

After 50000 ml of N-methyl-2-pyrrolidone(NMP) was charged into a tank(1) for preparing polymerization solvent, 3000 g of $CaCl_2$ and 100 g of $MgCl_2$ was added and dissolved completely to prepare a preliminary polymerization solvent, which was transferred to a preliminary polymerization tank(2) through a transfer line-(3) by using a transfer pump. Subsequently, 2450 g of 1,4-phenylenediamine(PPD) was added into the preliminary tank(2) and dissolved.

After the temperature of the completely dissolved resulting solution was lowered to 20 °C, it was transferred to a reactor(7) through a transfer line(4) by using a metering pump. At this time, the solution was controlled to be charged continuously by constant amounts into the reactor(7). At the same time, 4595 g of terephthaloyl chloride contained in a raw materials reserving tank(5) was controlled to be charged continuously into the reactor(7) through a Transfer a line(6). At this time, the amounts of PPD solution and TPC were controlled to be equal molar amount. Then the mixture in the reactor(7) was reacted to prepare a liquid crystalline polymer solution, which was then discharged continuously through a discharge opening(8) into a maturing container(9).

The liquid crystalline polymer solution contained in the container was raised to 50 °C and was

maintained for 5 hours. At the end of this period, the polymer was cut to an appropriate size and was immersed into aqueous 5 wt % KOH solution to extract the polymerization solvent, thereby separating the polymer. The separated polymer was pulverized in a pulping machine and dried to prepare pulp.

The measured inherent viscosity of the obtained is 5.3.

Comparative Example 1

After a 2 l reactor was completely dried by sufficient purge with nitrogen, 500 ml of N-methyl-2-pyrrolidone(NMP) was charged into the reactor, followed by adding 25 g of $CaCl_2$ and 10 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 0 °C by cooling with water and ice, followed by adding 45.95 g of terephthaloyl chloride, and polymerizing with vigorous stirring, to obtain liquid crystalline polymer solution. Then the temperature of the solution was raised to 150 °C and the solution was maintained for 5 hours. At the end of this period, the polymer was immersed in water to extract the polymerization solvent from the polymer, thereby separating polymer. The separated polymer was pulverized in a pulping machine and dried to prepare the pulp.

The measured inherent viscosity of obtained pulp is 3.8.

Comparative Example 2 (Compared to Example 31)

After a 2 l reactor was completely dried by sufficient purge with nitrogen, 400 ml of N-methyl-2-pyrrolidone(NMP) was charged into the reactor, followed by adding 10 g of $CaCl_2$ and 30 g of pyridine into the solvent, mixing until completely dissolved to prepare the preliminary polymerization solvent and then adding and dissolving 24.5 g of 1,4-phenylene diamine for 10 minutes.

After the temperature of the resulting solution was lowered to 25 °C by cooling with water and ice, 45.95 g of terephthaloyl chloride was added and the mixture was polymerized with stirring to be a slurry soon. The obtained polymer was heated to 60 °C and maintained for 4 hours, thereafter it was immersed into water to extract the polymerization solvent, thereby separating the polymer. The separated polymer was pulverized in a pulping machine and dried to be non-pulp type powders having no L/D. The measured inherent viscosity of the obtained polymer is 2.9.

Comparative Example 3

After a 2 l reactor was completely dried by sufficient purge with nitrogen, 500 ml of N-methyl-2-pyrrolidone(NMP) was charged into the reactor, followed by adding 35 g of $CaCl_2$ into the solvent, mixing until completely dissolved to prepare the preliminary polymerization solvent and then adding and dissolving 24.5 g of 1,4-phenylene diamine for 10 minutes.

After the temperature of the resulting solution was lowered to 20 °C by cooling with water and ice, 45.95 g of terephthaloyl chloride was added and the mixture was polymerized with stirring to be a slurry soon. The obtained polymer was heated to 50 °C and maintained for 5 hours, thereafter it was immersed into water to extract the polymerization solvent, thereby separating the polymer. The separated polymer was pulverized in a pulping machine and dried to prepare the pulp. The measured inherent viscosity of the obtained polymer is 2.8.

Comparative Example 4

After a 2 l reactor was completely dried by sufficient purge with nitrogen, 500 ml of N-methyl-2-pyrrolidone(NMP) was charged into the reactor, followed by adding 0.45 g of $AlCl_3$ into the solvent, mixing until completely dissolved to prepare the preliminary polymerization solvent and then adding and dissolving 24.5 g of 1,4-phenylene diamine.

After holding the resulting solution for 5 minutes, the temperature was lowered to 30 °C by cooling with water and ice, 45.95 g of terephthaloyl chloride was added and the mixture was polymerized with vigorous stirring to be slurry soon. Then the obtained polymer was raised to 70 °C and the polymer was maintained for 0.5 hour. At the end of this period, the polymer was immersed in water to extract the polymerization solven t from the polymer, thereby separating polymer. The separated polymer was pulverized in a pulping machine and dried to be non-pulp type powders having no L/D.

The measured inherent viscosity of obtained pulp is 0.8.

As can be seen from the result of the example 1 to 50 and the comparative example 1 to 4, according to the present invention, it is possible to prepare an aromatic polyamide pulp having high molecular weight through the easily-controlled process without using a tertiary amine of high price used in the processes of prior art.

## Claims

1. A process for the preparation of aromatic polyamide pulp containing homopolymer or copolymer with repeating unit expressed by the general formula (1) or (2)

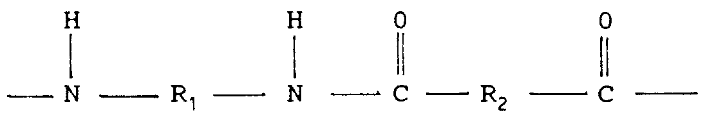
(1)

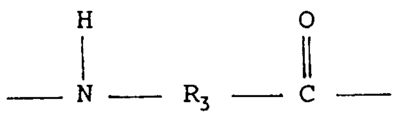
(2)

wherein each of $R_1$, $R_2$, $R_3$ represents one of the following aromatic groups,

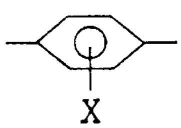 , 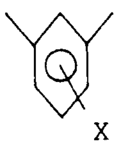 , 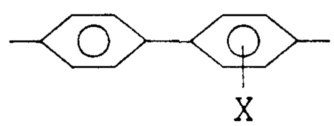 , 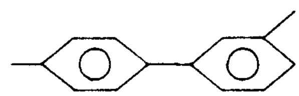 ,

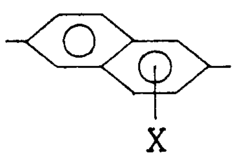 , 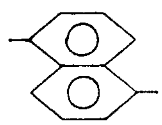 , 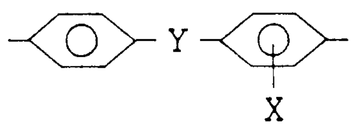 , 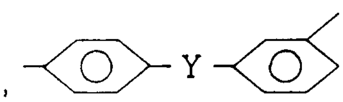

X is -H, -Cl, -Br, -I, $C_{1-4}$ alkyl group or $C_{1-4}$ alkoxy group, Y is

$-CH_2-$, 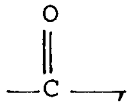 , 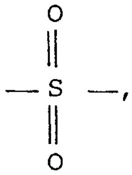 , $-O-$, 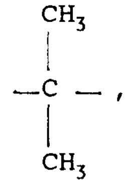 , 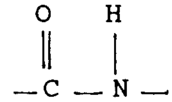

or 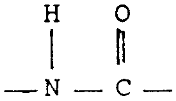

which comprises:

a) preparing a polymerization solvent by adding a Lewis acid type compound to an amide type organic solvent, an urea type organic solvent or the mixture thereof;

b) obtaining anisotropic liquid crystal polymer solution prior to gelation by dissolving an aromatic diamine in the prepared polymerization solvent and adding an aromatic diacid chloride to the solution;

c) maintaining the polymer solution at a predetermined temperature for a predetermined period; and

d) separating the polymerization solvent and pulverizing the polymer by a pulping machine.

**2.** A process according to claim 1, wherein the above step d) is carried out by immersing the polymer prepared by the step c) into water, an aqueous basic solution or a mixed coagulating solution of the polymerization solvent with one of water and aqueous basic solution to separate the polymerization solvent and pulverising the polymer in a pulping machine.

**3.** A process according to claim 1 wherein the above step d) is carried out by pulverizing the polymer prepared by the step c), without separating the polymerization solvent, together with a coagulating solution as defined in claim 2 and drying the polymer.

**4.** A process according to any preceding claim wherein the product of step b) is continuously extruded into a maturing container in which step c) is carried out.

**5.** A process according to any preceding claim wherein the Lewis acid type compound is selected from the group consisting of transition metal halides Mg halide and the compound of halogen element combined with IIIA, IVA, VA or VIA group element on the periodic table.

**6.** A process according to claim 5 wherein the Lewis acid compound is selected from the group consisting of $BF_3$, $BCl_3$, $AlCl_3$, $FeCl_2$, $FeCl_3$, $ZnCl_2$, $SbCl_2$, $HgCl_2$ and $MgCl_2$.

**7.** A process according to any preceding claim wherein the amount of the Lewis acid added is from 0.1 to 15% by weight based on total organic solvent.

**8.** A process according to any preceding claim wherein one or more inorganic salts are further added and mixed into the polymerization solvent.

**9.** A process according to claim 8 wherein the inorganic salt is selected from the group consisting of the $CaCl_2$, LiCl, NaCl, KCl, LiBr and KBr.

**10.** A process according to claim 8 or 9 wherein the amount of the inorganic salt added is from 0.1 to 12% by weight based on total organic solvent.

**11.** A process according to any of claims 8 to 10 wherein the total amount of Lewis acid compound and inorganic salts added is from 2.0 to 25% by weight based on total organic solvent, preferably from 3.0 to 13% by weight based on total organic solvent.

**12.** A process according to any preceding claim wherein the organic solvent is selected from the group consisting of N-methyl-2-pyrrolidone, N,N,-dimethylacetamide, hexamethyl phosphoramide, N,N,N',N'-tetramethylurea, N,N-dimethylformamide, dimethylsulfoxide and a mixture thereof.

**13.** A process according to any preceding claim wherein in step c the liquid crystalline polymer solution stands at the temperature of from 25 to 100 ° C for at least 0.5 hour, preferably for a period in the range 0.5 to 5 hours.

**14.** A process according to claim 2 wherein the aqueous basic solution is selected from the group consisting of aqueous solutions of NaOH, KOH, $Na_2CO_3$, $K_2CO_3$, $NaH_2CO_3$, $Ca(OH)_2$ and CaO.

**15.** A process according to claim 14 wherein the concentration of the aqueous basic solution is from 0.1 to 20% by weight.

**16.** A process according to any preceding claim wherein the content of the polymer in the polymer solution is from 3 to 30% by weight based on total organic solvent.

**17.** A pulp which is the product of any preceding claim wherein the pulp is characterized by having an inherent viscosity of 4.0 or higher, a dimension of 0.1 mm - 5 cm in length, 1 $\mu$m - 200 $\mu$m in diameter, a crystallinity of more than 45%, apparent crystallite size of more than 40 Å and specific surface area of more than 4.0 $m^2/g$.

**18.** A pulp according to claim 17 wherein the aromatic polyamide is polyphenylene terephthalamide(PPTA).

FIG. 1

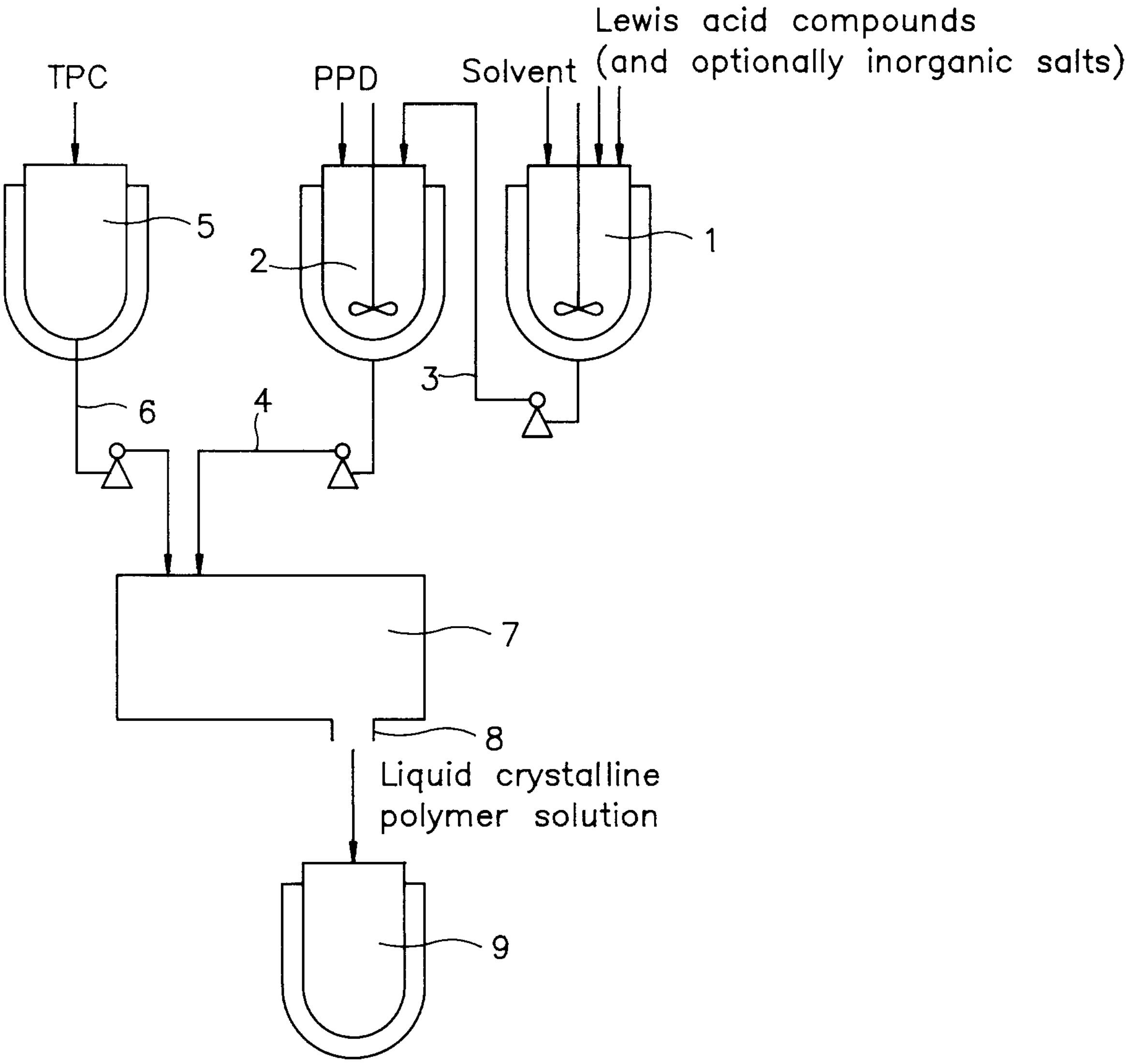
Lewis acid compounds
(and optionally inorganic salts)
TPC
PPD
Solvent
5
2
1
3
6
4
7
8
Liquid crystalline
polymer solution
9